# EUROPÄISCHE PATENTANMELDUNG

(11) **EP 2 620 878 A1**
(43) Veröffentlichungstag der Anmeldung: **31.07.2013**
(21) Anmeldenummer: 12153149.5
(22) Anmeldetag: 30.01.2012
(51) Int. Cl.: G06F 13/38, G06F 9/44

(54) **Verfahren zum treiberlosen Anbinden von zumindest einem Peripheriegerät an eine Recheneinheit**

(71) Anmelder: Secunet Security Networks Aktiengesellschaft, 45128 Essen (DE)
(72) Erfinder: Reimers, Dirk, 23898 Wentorf AS (DE); Wappenschmidt, Armin, 21029 Hamburg (DE)
(74) Vertreter: Rohmann, Michael

(57) **Zusammenfassung**

Verfahren zum treiberlosen Anbinden von zumindest einem Peripheriegerät an eine Recheneinheit, wobei die Recheneinheit und das Peripheriegerät jeweils über eine Schnittstelle zum Datenaustausch verfügen. An die Schnittstelle der Recheneinheit wird ein Übersetzer angeschlossen, welcher Übersetzer mit der Schnittstelle des Peripheriegeräts verbunden wird. In der Recheneinheit werden Nutzdaten bereitgestellt, in welche Nutzdaten Steuerungsdaten für das Peripheriegerät eincodiert werden. In dem Übersetzer werden die Steuerungsdaten aus den Nutzdaten isoliert, wobei der Übersetzer mit den Steuerungsdaten das Peripheriegerät ansteuert.

## Beschreibung

Die Erfindung betrifft ein Verfahren zum treiberlosen Anbinden von zumindest einem Peripheriegerät an eine Recheneinheit.

Bei den bisher bekannten Verfahren zum Anbinden eines Peripheriegeräts an eine Recheneinheit ist es regelmäßig erforderlich, einen Treiber auf der Recheneinheit zu installieren, so dass die Recheneinheit mit dem Peripheriegerät kommunizieren kann. Um die zum Betrieb eines Peripheriegeräts erforderlichen Treiber installieren zu können, muss der Benutzer der Recheneinheit über Administratorrechte verfügen. In komplexen Netzwerken verfügen die einzelnen Benutzer meistens jedoch nicht über Administratorrechte, so dass die Treiberinstallation von einem Systemadministrator durchgeführt werden muss. Insbesondere die Kommunikation zwischen einem Smartphone und einem Peripheriegerät, beispielsweise einem Kartenleser oder einem externen Massenspeicher, ist kritisch, da mit dem Smartphone der Kartenleser oder Massenspeicher über die Schnittstellen des Smartphones nicht angesprochen werden kann.

Der Erfindung liegt daher das technische Problem zugrunde, ein Verfahren der eingangs genannten Art anzugeben, mit dem eine treiberlose Verbindung zwischen einer Recheneinheit und einem Peripheriegerät herstellbar ist und mit dem Daten sicher zwischen der Recheneinheit und dem Peripheriegerät ausgetauscht werden können.

Zur Lösung des technischen Problems lehrt die Erfindung ein Verfahren zum treiberlosen Anbinden von zumindest einem Peripheriegerät an eine Recheneinheit, wobei die Recheneinheit und das Peripheriegerät jeweils über eine Schnittstelle zum Datenaustausch verfügen, wobei an die Schnittstelle der Recheneinheit ein Übersetzer angeschlossen wird, welcher Übersetzer mit der Schnittstelle des Peripheriegeräts verbunden wird, wobei in der Recheneinheit Nutzdaten bereitgestellt werden, in welche Nutzdaten Steuerungsdaten für das Peripheriegerät eincodiert werden, wobei in dem Übersetzer die Steuerungsdaten aus den Nutzdaten isoliert werden und wobei der Übersetzer mit den Steuerungsdaten das Peripheriegerät steuert. Gemäß einer Ausführungsform enthalten die Steuerungsdaten Steuerungsbefehle, welche Steuerungsbefehle in dem Peripheriegerät ausgeführt werden. Es ist möglich, dass die Nutzdaten Inhaltsdaten enthalten, welche Inhaltsdaten von dem Übersetzer an das Peripheriegerät übermittelt werden und vorzugsweise in dem Peripheriegerät ausgeführt und/oder gespeichert werden. Vorzugsweise ist ein Anwender berechtigt, Programme auf der Recheneinheit auszuführen, welche Programme auf die Schnittstelle zugreifen können bzw. die Schnittstelle zur Datenkommunikation einsetzen können. Es empfiehlt sich, dass zur Steuerung der Schnittstelle eine Applikation (App) und/oder eine Portable App auf der Recheneinheit installiert ist. Gemäß einer besonders bevorzugten Ausführungsform ist die Recheneinheit mit der Maßgabe ausgebildet, dass die Recheneinheit mit anderen Recheneinheiten, beispielsweise über das Internet, kommunizieren kann. Die Kommunikation zwischen der Recheneinheit und einer anderen Recheneinheit erfolgt gemäß einer besonders bevorzugten Ausführungsform ausschließlich über eine Internetschnittstelle der Recheneinheit und eine Internetschnittstelle der anderen Recheneinheit. Bei der anderen Recheneinheit handelt es sich beispielsweise um einen Server einer Bank.

Die Steuerungsdaten werden mit der Maßgabe in Nutzdaten eincodiert bzw. umgewandelt, dass die Steuerungsdaten das Datenformat der Nutzdaten aufweisen, welches Datenformat der Nutzdaten von dem Format der Steuerungsdaten verschieden ist. Vorteilhafterweise extrahiert der Übersetzer (Controller) die Steuerungsdaten aus den Nutzdaten. Es ist möglich, dass der Übersetzer die Nutzdaten rückumwandelt, so dass aus den Nutzdaten die Steuerungsdaten für das Peripheriegerät hervorgehen. Gemäß einer Ausführungsform ist der Übersetzer als separates Bauteil ausgebildet. Es empfiehlt sich, dass der Übersetzer kabelgebunden und/oder kabelfrei mit dem Peripheriegerät verbunden ist.

Vorzugsweise werden von dem Peripheriegerät an den Übersetzer übermittelte Daten in dem Übersetzer in Rücktransportdaten eincodiert, wobei die Rücktransportdaten von dem Übersetzer an die Recheneinheit übermittelt werden. Vorteilhafterweise weisen die von dem Übersetzer an die Recheneinheit übermittelten Rücktransportdaten das gleiche Datenformat auf, das auch die Nutzdaten aufweisen. Gemäß einer Ausführungsform ist die Kommunikation zwischen dem Übersetzer und dem Peripheriegerät eine bidirektionale Kommunikation. Das heißt, der Übersetzer übermittelt die Steuerungsdaten an das Peripheriegerät und empfängt die von dem Peripheriegerät an den Übersetzer übermittelten Daten.

Es empfiehlt sich, dass aus den Rücktransportdaten in der Recheneinheit die Daten isoliert werden. Die Rücktransportdaten werden in der Recheneinheit mit der Maßgabe umgewandelt, dass aus den Rücktransportdaten die von dem Peripheriegerät an den Übersetzer übermittelten Daten hervorgehen bzw. extrahiert werden. Gemäß einer Ausführungsform ist es möglich, dass die Steuerungsdaten mit weiteren Daten in Nutzdaten umgewandelt bzw. in Nutzdaten eincodiert werden. Zweckmäßigerweise werden durch den Übersetzer die Steuerungsdaten und weiteren Daten aus den Nutzdaten isoliert. Vorzugsweise werden die Steuerungsdaten und weitere Daten von dem Übersetzer an das Peripheriegerät übermittelt. Es ist also möglich, dass beliebige Daten zwischen der Recheneinheit und dem Peripheriegerät in einer besonders bevorzugten Ausführungsform bidirektional austauschbar sind.

Gemäß einer Ausführungsform werden die Nutzdaten und/oder die Rücktransportdaten als Mediendatei, vorzugsweise als Audiodatei oder Bilddatei bereitgestellt. Die Steuerungsdaten und/oder weiteren Daten werden besonders bevorzugt in zumindest eine Mediendatei und vorzugsweise lediglich eine Mediendatei eincodiert bzw. in eine Mediendatei umgewandelt.

Es empfiehlt sich, dass die Recheneinheit eine aus der Gruppe "PC, mobiler Computer, Mobiltelefon, Smartphone" ausgewählte Komponente ist. Mobiler Computer meint im Rahmen der Erfindung ein Laptop, ein Tablet oder ein Netbook. Ein Smartphone ist im Rahmen der Erfindung ein PDA (Personal Digital Assistant) mit Telefonfunktion. In einer besonders bevorzugten Ausführungsform ist die Recheneinheit ein Smartphone. Ein Anwender verfügt zweckmäßigerweise über beschränkte Zugriffsrechte auf das Betriebssystem der Recheneinheit, wobei wesentlich ist, dass trotz der beschränkten Zugriffsrechte ein Senden und/oder Empfangen von Datenpaketen über die Schnittstelle möglich ist.

Besonders bevorzugt ist die Schnittstelle der Recheneinheit und/oder des Übersetzers jeweils eine kabelgebundene, insbesondere eine USB-Schnittstelle, oder eine kabellose Schnittstelle. Vorzugsweise verfügen die Recheneinheit und der Übersetzer jeweils über eine Schnittstelle, über welche Schnittstellen Nutzdaten und/oder Rücktransportdaten zwischen der Recheneinheit und dem Übersetzer austauschbar sind. Die Verwendung von USB-Schnittstellen hat sich als zweckmäßig herausgestellt, da Recheneinheiten standardmäßig mit USB-Schnittstellen ausgestattet sind. Es empfiehlt sich besonders, dass die kabellose Schnittstelle der Recheneinheit und/oder des Übersetzers eine aus der Gruppe "Bluetooth-Schnittstelle, WLAN-Schnittstelle" ausgewählte Schnittstelle ist. Grundsätzlich ist auch der Einsatz von IR-Schnittstellen möglich. Besonders bevorzugt ist die Schnittstelle der Recheneinheit und des Übersetzers jeweils eine Bluetooth-Schnittstelle. Vorteilhafterweise ist insbesondere die kabellose Verbindung über eine kabellose Schnittstelle zwischen der Recheneinheit und dem Übersetzer in einer Ausführungsform geschützt, vor allem passwortgeschützt. Auf diese Weise wird sichergestellt, dass keine unautorisierte Verbindung zwischen der Recheneinheit und dem Übersetzer herstellbar ist.

Besonders bevorzugt ist das Peripheriegerät ein Authentisierungsgerät. Mit dem Authentisierungsgerät ist es beispielsweise möglich, einen Datenaustausch zwischen der Recheneinheit und einer weiteren Recheneinheit, beispielsweise über das Internet, abzusichern. Es empfiehlt sich, dass die auszutauschenden Daten mit dem Authentisierungsgerät insbesondere mit einem Sicherheitszertifikat versehen werden, so dass die die Austauschdaten empfangende, weitere Recheneinheit die Echtheit der ausgetauschten Daten anhand des Sicherheitszertifikats überprüfen kann. Das Authentisierungsgerät ist beispielsweise in Verbindung mit dem neuen elektronischen Personalausweis (nPA) und/oder Signaturkarten und/oder Verschlüsselungs-Hardware einsetzbar. Die Authentisierung erfolgt vorteilhafterweise "mittels Besitz". Die Authentisierung "mittels Besitz" meint, dass ein Anwender zur Authentisierung der Daten in Besitz eines für die Authentisierung erforderlichen Gegenstandes sein muss.

Gemäß einer Ausführungsform ist das Peripheriegerät ein Datenspeicher, beispielsweise ein USB-Speicher oder eine USB-Festplatte. Grundsätzlich ist es möglich, dass als Peripheriegerät ein Drucker und/oder eine Kamera einsetzbar ist. Es liegt im Rahmen der Erfindung, dass auf einem Dateisystem eines USB-Speichers oder einer USB-Festplatte abgespeicherte Dateien zur Kommunikation zwischen der Recheneinheit und dem Peripheriegerät vorzugsweise in Audiodaten codiert werden. Grundsätzlich ist es möglich, dass an eine Kamera-Schnittstelle zu übertragende Daten in Bilddaten bzw. Kamerabilder codiert werden.

Es liegt im Rahmen der Erfindung, dass der Übersetzer als separates Bauteil ausgeführt ist. Separates Bauteil meint im Rahmen der Erfindung, dass der Übersetzer als von der Recheneinheit und/oder dem Peripheriegerät unabhängiges Bauteil ausgebildet ist. Gemäß einer Ausführungsform ist an den Übersetzer lediglich eine Recheneinheit und lediglich ein Peripheriegerät angeschlossen. Vorteilhafterweise ist der mit der Recheneinheit verbundene Übersetzer mit zumindest einem und bevorzugt einer Mehrzahl bzw. Vielzahl von Peripheriegeräten verbindbar. Grundsätzlich ist es möglich, dass der Übersetzer in die Recheneinheit und/oder das Peripheriegerät integriert ist.

Der Erfindung liegt die Erkenntnis zugrunde, dass mit dem erfindungsgemäßen Verfahren ein problemloser Anschluss von Hardware an eine Recheneinheit, insbesondere an einen Computer oder ein Smartphone, auch dann möglich ist, wenn der Anwender keine Administratorrechte zur Installation von zusätzlichen Programmen auf dem Computer oder dem Smartphone besitzt. Es ist also möglich, im Rahmen des erfindungsgemäßen Verfahrens zuverlässig und sicher Daten zwischen einem Computer oder Smartphone und einem Peripheriegerät auszutauschen. Wird als Peripheriegerät ein Authentisierungsgerät eingesetzt, ist eine sichere Datenübertragung zwischen dem Computer oder dem Smartphone und einem weiteren Computer über das Internet möglich, ohne dass eine unkontrollierte Beeinflussung oder ein Ausspionieren der übermittelten Daten von einer dritten Instanz zu befürchten ist. Vorteilhafterweise ist es bei dem erfindungsgemäßen Verfahren lediglich erforderlich, kleine Programme auf dem Computer oder dem Smartphone zu installieren, die nicht systemweit installiert werden müssen. Wesentlich ist dabei, dass die zu installierenden Programme auf eine Schnittstelle des Computers oder Smartphones zur externen Kommunikation zugreifen können. Der erfindungsgemäß zwischen der Recheneinheit und dem Peripherigerät angeordnete Übersetzer (Controller) muss nur über eine geringe Rechenleistung verfügen, da lediglich Audiodaten in Steuerungsdaten bzw. die von dem Peripheriegerät zu der Recheneinheit zu transferierenden Daten in Audiodaten umgewandelt bzw. in Audiodaten eincodiert werden müssen. Komplexe Rechenoperationen müssen in vorteilhafter Weise mit dem Übersetzer nicht ausgeführt werden. Wesentlich an der Erfindung ist, dass zur Kommunikation zwischen dem Peripheriegerät und der Recheneinheit kein gerätespezifischer Treiber erforderlich ist, wodurch keine aufwendige Administration der Recheneinheit erforderlich wird. Dies ist insbesondere dann vorteilhaft, wenn die Recheneinheit Bestandteil eines umfangreichen Systems vernetzter, fremdadministrierter Recheneinheiten ist. Im Ergebnis zeichnet sich das erfindungsgemäße Verfahren durch eine besondere Einfachheit und eine problemlose Ausführbarkeit aus.

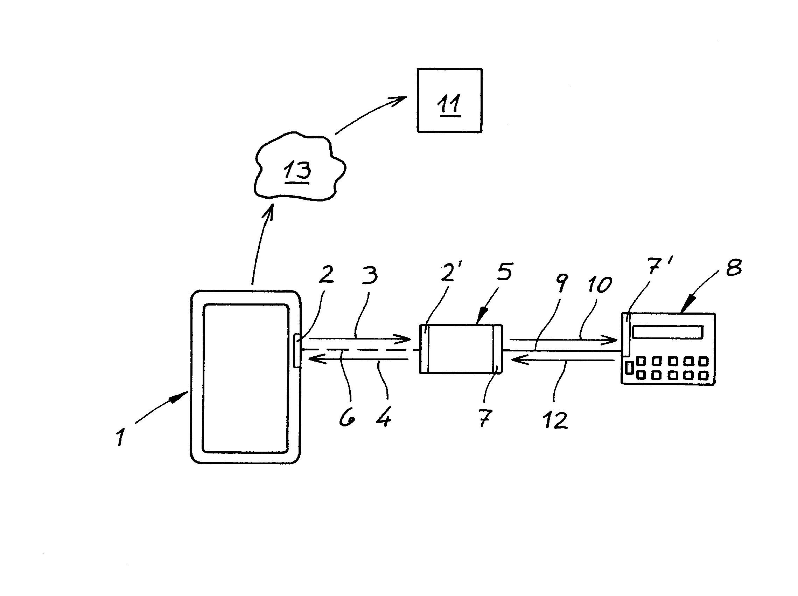

Nachfolgend wird die Erfindung anhand einer lediglich ein Ausführungsbeispiel darstellenden Zeichnung erläutert. Die einzige Figur zeigt eine schematische Darstellung einer Vorrichtung zur Durchführung des erfindungsgemäßen Verfahrens.

In der Figur ist eine als Smartphone 1 ausgebildete Recheneinheit dargestellt, welches Smartphone 1 über eine Schnittstelle 2 verfügt. Die Schnittstelle zur externen Kommunikation bzw. zur Kommunikation mit außerhalb des Smartphones 1 angeordneten Recheneinheiten ist gemäß dem Ausführungsbeispiel als Bluetooth-Schnittstelle 2 ausgebildet. Über die Bluetooth-Schnittstelle 2 ist es möglich, von dem Smartphone 1 aus Daten zu versenden und Daten in das Smartphone 1 zu übertragen. Der Pfeil 3 symbolisiert das Smartphone 1 verlassende Daten, der Pfeil 4 stellt zum Smartphone 1 hin übermittelte Daten dar. An die Schnittstelle 2 des Smartphones 1 ist ein Übersetzer (Controller) 5 drahtlos gekoppelt, was durch die strichpunktiert dargestellte Verbindungslinie 6 zwischen dem Smartphone 1 und dem Übersetzer 5 verdeutlicht ist. Zur Kopplung des Smartphones 1 an den Übersetzer 5 verfügt der Übersetzer 5 über eine Bluetooth-Schnittstelle 2'. In der Figur ist dargestellt, dass an eine weitere Schnittstelle 7 des Übersetzers 5 ein als Kartenleser 8 ausgestaltetes Peripheriegerät mit einem Verbindungskabel 9 angeschlossen ist. Dazu verfügt der Kartenleser 8 über eine mit der Schnittstelle 7 kompatible und für einen Datenaustausch mit dem Übersetzer 5 geeignete Schnittstellen 7'. Über das Verbindungskabel 9 sind bidirektional Datenpakete zwischen dem Übersetzer 5 und dem Kartenleser 8 austauschbar.

Gemäß dem Ausführungsbeispiel ist auf dem Smartphone 1 eine Anwendung (App) installiert, mit der Steuerungsdaten für den Übersetzer 5 in eine Audiodatei zur Ausbildung von Nutzdaten eincodiert werden. Die Nutzdaten werden über die Schnittstelle 2 des Smartphones 1 an den Übersetzer 5 bzw. die Schnittstelle 2' des Übersetzers 5 übermittelt, was durch den Pfeil 3 dargestellt ist. In dem Übersetzer 5 werden aus den Nutzdaten die Steuerungsdaten für den Kartenleser 8 extrahiert. Das bedeutet, dass die Steuerungsdaten von den Audiodaten in dem Übersetzer 5 getrennt werden. Die Steuerungsdaten werden dann von dem Übersetzer 5 durch das Verbindungskabel 9 in Richtung des Pfeils 10 an den Kartenleser 8 übermittelt. Diese Steuerungsdaten umfassen beispielsweise eine Aufforderung für einen Anwender, eine von dem Kartenleser 8 lesbare und nicht dargestellte Karte in den Kartenleser 8 einzuführen, um einen Befehl für eine zentrale Recheneinheit 11, beispielsweise einen Bankserver, von dem Smartphone 1 mit einer elektronischen Signatur zu versehen. Weiterhin wird auf diese Weise der zentralen Recheneinheit 11 ermöglicht, die Echtheit eines von dem Smartphone 1 ausgesendeten Befehls zu überprüfen. Die von dem Kartenleser 8 ermittelten Informationen bzw. Daten (D) werden über das Verbindungskabel 9 entlang des Pfeils 12 an den Übersetzer 5 übermittelt. In dem Übersetzer 5 werden die von dem Kartenleser 8 stammenden Daten (D) zur Ausbildung von Rücktransportdaten in eine Audiodatei eincodiert. Die Rücktransportdaten werden dann gemäß der Figur über die Bluetooth-Schnittstelle 2' des Übersetzers 5 an die Schnittstelle 2 des Smartphones 1 übermittelt.

Weiterhin ist in der Figur dargestellt, dass das Smartphone 1 eine Verbindung über das Internet 13 mit der zentralen Recheneinheit 11 aufgebaut hat. Die zentrale Recheneinheit 11 prüft die von dem Smartphone 1 übermittelten Informationen anhand der durch den Kartenleser 8 bereitgestellten Daten (D) (Authentisierungsdaten bzw. elektronische Unterschrift). Stimmen die von dem Smartphone 1 übermittelten Authentisierungsdaten mit in der zentralen Recheneinheit 11 abgespeicherten Authentisierungsdaten überein, lässt die zentrale Recheneinheit 11 die über das Smartphone 1 angewiesenen Operationen zu. Bei Nichtübereinstimmung der von dem Smartphone 1 übermittelten Authentisierungsdaten mit den in der zentralen Recheneinheit 11 abgelegten Authentisierungsdaten lässt die zentrale Recheneinheit 11 die Ausführung der durch das Smartphone 1 initiierten Operation nicht zu.

## Patentansprüche

1. Verfahren zum treiberlosen Anbinden von zumindest einem Peripheriegerät an eine Recheneinheit, wobei die Recheneinheit (1) und das Peripheriegerät (8) jeweils über eine Schnittstelle (2, 7') zum Datenaustausch verfügen, wobei an die Schnittstelle (2) der Recheneinheit (1) ein Übersetzer (5) angeschlossen wird, welcher Übersetzer (5) mit der Schnittstelle (7') des Peripheriegeräts (8) verbunden wird, wobei in der Recheneinheit (1) Nutzdaten bereitgestellt werden, in welche Nutzdaten Steuerungsdaten für das Peripheriegerät (8) eincodiert werden, wobei in dem Übersetzer (5) die Steuerungsdaten aus den Nutzdaten isoliert werden, wobei der Übersetzer (5) mit den Steuerungsdaten das Peripheriegerät (8) steuert.

2. Verfahren nach Anspruch 1, wobei von dem Peripheriegerät (8) an den Übersetzer (5) übermittelte Daten (D) in dem Übersetzer (5) in Rücktransportdaten eincodiert werden, wobei die Rücktransportdaten von dem Übersetzer (5) an die Recheneinheit (1) übermittelt werden.

3. Verfahren nach Anspruch 2, wobei aus den Rücktransportdaten in der Recheneinheit (1) die Daten (D) isoliert werden.

4. Verfahren nach einem der Ansprüche 1 bis 3, wobei die Nutzdaten und/oder die Rücktransportdaten als Mediendatei, vorzugsweise als Audiodatei oder Bilddatei bereitgestellt werden.

5. Verfahren nach einem der Ansprüche 1 bis 4, wobei die Recheneinheit (1) eine aus der Gruppe "PC, mobiler Computer, Mobiltelefon, Smartphone" ausgewählte Komponente ist.

6. Verfahren nach einem der Ansprüche 1 bis 5, wobei die Schnittstellen (2, 2') der Recheneinheit (1) und/oder des Übersetzers (5) jeweils eine kabelgebundene, insbesondere eine USB-Schnittstelle oder jeweils eine kabellose Schnittstelle ist.

7. Verfahren nach Anspruch 6, wobei die kabellose Schnittstelle der Recheneinheit (1) und des Übersetzers (5) jeweils aus der Gruppe "Bluetooth-Schnittstelle, WLAN-Schnittstelle" ausgewählt ist.

8. Verfahren nach einem der Ansprüche 1 bis 7, wobei das Peripheriegerät (8) ein Authentisierungsgerät ist.

9. Verfahren nach einem der Ansprüche 1 bis 8, wobei das Peripheriegerät (8) ein Datenspeicher, beispielsweise ein USB-Speicher oder eine USB-Festplatte ist.

10. Verfahren nach einem der Ansprüche 1 bis 9, wobei das Peripheriegerät (8) ein Drucker oder eine Kamera ist.

11. Verfahren nach einem der Ansprüche 1 bis 10, wobei der Übersetzer (5) als separates Bauteil ausgebildet ist.

12. Verfahren nach einem der Ansprüche 1 bis 10, wobei der Übersetzer (5) in das Peripheriegerät integriert ist.
